# FASCICULE DE BREVET EUROPEEN

(11) **EP 1 368 622 B1**
(45) Date de publication et mention de la délivrance du brevet: **27.10.2004**
(21) Numéro de dépôt: 02718233.6
(22) Date de dépôt: 01.03.2002
(51) Int. Cl.: G01J 3/06, H04J 14/02, G02B 26/08

(54) **SPECTROMETRE COMPORTANT UNE OPTIQUE MATRICIELLE ACTIVE**
SPEKTROMETER MIT AKTIVER OPTISCHER MATRIX
SPECTROMETER COMPRISING ACTIVE MATRIX OPTICS

(30) Priorité: 02.03.2001 FR 0102924
(43) Date de publication de la demande: 10.12.2003
(73) Titulaire: Jobin Yvon S.A.S., 91160 Longjumeau (FR)
(72) Inventeur: DA SILVA, Edouard, F-59800 LILLE (FR)
(74) Mandataire: Michelet, Alain
(86) Numéro de dépôt international: PCT/FR2002/000764
(87) Numéro de publication internationale: WO 2002/071010

(56) Documents cités:
- DE-A- 3 805 995
- US-A- 5 960 133
- US-A- 6 128 078

## Description

La présente invention concerne un spectromètre à réponse adaptable par optique matricielle active. Elle a des applications dans les appareils spectroscopiques optiques dans lesquels un faisceau lumineux est analysé du point de vue de ses composantes spectrales et, par exemple, dans les études en absorption, diffusion, Raman, fluorescence, phosphorescence, émission.

Un spectromètre optique est un appareil de mesure destiné à sélectionner et fournir des informations sur le contenu spectral en longueur d'onde ou en fréquence d'un faisceau lumineux. II permet en particulier d'analyser un ou des corps par leurs effets sur la lumière aussi bien en émission qu'en absorption. Le spectromètre comporte un élément dispersif destiné à séparer et à étaler dans l'espace sous forme d'un spectre de dispersion les différentes longueurs d'onde d'un faisceau lumineux. Le faisceau lumineux est en effet constitué de photons qui sont caractérisés par leur fréquence vibratoire ou longueur d'onde. Au cas où tous les photons ont la même longueur d'onde on parle de faisceau monochromatique et le spectre dudit faisceau se résume à une raie de longueur d'onde caractéristique. Un faisceau lumineux peut être plus complexe et comporter plusieurs raies et/ou des bandes.

Le document US-A- 6 128 078 divulgue un spectromètre destiné à l'acquisition séquentielle de signaux spectraux.

On connaît des spectromètres dont l'élément dispersif est un prisme ou un réseau de diffraction. En sortie de l'élément dispersif on dispose un moyen de mesure qui est généralement un dispositif photoélectrique destiné à convertir les photons en signaux électriques qui peuvent être traités et analysés plus tacitement. Parmi les dispositifs photoélectrique on connaît les photomultiplicateurs, les semi-conducteurs ou autres dispositifs solides, dispositif à transfert de charge (CCD), CMOS, photodiodes, phototransistor, terres rares.... Chacun de ces dispositifs photoélectrique présente des avantages et des inconvénients en terme de sensibilité, résolution, rapidité, coût... qui les font choisir en fonction des applications. Les dispositifs à semi-conducteurs ou solides ont en particulier l'avantage de pouvoir être réalisés sous forme de matrices comportant un grand nombre d 'éléments détecteurs dans un espace réduit. Ces dispositifs matriciels permettent ainsi la réalisation de spectromètres multicanals à haute résolution et à grande rapidité de mesure sur une plage de longueur d'onde par rapport aux dispositifs comportant des détecteurs du type photomultiplicateur qui sont plutôt employé dans les spectromètres monocanals et nécessitent même parfois des dispositifs mécaniques additionnels pour pouvoir obtenir un spectre sur une certaine plage de longueur d'ondes.

Du fait de leur construction et du moyen dispersif mis en oeuvre, l'étalement spectral obtenu est régulier en ce sens que les valeurs de longueur d'onde sont croissantes (ou décroissante suivant le sens) lorsque l'on parcoure l'espace dans lequel le spectre est étalé et, à la résolution prés du système, des longueurs d'ondes différentes ne peuvent pas atteindre un même élément de détection d'un dispositif photoélectrique.

On connaît par ailleurs des dispositifs électromicromécanique qui sont issus des techniques de fabrication des circuits intégrés et qui permettent de réaliser des actionneurs microscopiques. On connaît en particulier les matrices à une ou deux dimensions de miroirs ou de réseaux de diffraction dont chacun des éléments de la matrice peut être déplacé spécifiquement, en général basculés, par un signal de commande électrique. Dans d'autres dispositifs électromicromécaniques, l'élément peut être translaté et, dans ce cas, il est possible d'obtenir des effets optiques, par exemple extinction du signal lumineux, en faisant intervenir des phénomènes interférentiels, la translation étant, par exemple, d'un quart d'onde. Du fait de cette possibilité de déplacement du miroir ou réseau, le rayon lumineux l'atteignant peut être réfléchi ou réfracté selon des directions et donc des zones différentes de l'espace en fonction du signal de commande qui peut être numérique ou analogique. Dans le cas le plus simple, chacun des actionneurs peut prendre deux positions différentes en fonction du signal de commande. Dans des dispositifs plus évolués, l'actionneur peut se positionner dans plus de deux positions différentes et permettre ainsi un balayage plus ou moins complet de l'espace par le rayon réfléchi ou réfracté en fonction du signal de commande qui code alors pour ces différentes positions. Les dispositifs électromicromécaniques sont par exemple mis en oeuvre dans les appareils de vidéo projection à grand écran et dans ce cas une matrice du type à deux dimensions, ligne x colonne, est généralement employée.

L'invention propose un perfectionnement aux spectromètres connus, aussi bien du type mono canal que multicanal, par la mise en oeuvre d'un tel composant électromicromécanique entre l'élément dispersif et le dispositif photoélectrique de mesure. Les composants du spectre atteignant un élément de détection particulier peuvent ainsi être sélectionnés d'une manière active, que des composants du spectre soient combinés ou non pour atteindre un élément de détection particulier ou, au contraire, éliminés. II est ainsi possible d'obtenir une intégration ou combinaison de composants du spectre sur un seul élément de détection ce qui peut améliorer le rapport signal/bruit et/ou la sensibilité des mesures. Les composants du spectre qui sont combinés ou éliminés sont sélectionnables à volonté en fonction du/des éléments réflectifs ou diffractifs actionnés dans la matrice du dispositif électromicromécanique par des signaux de commande électrique.

L'invention concerne donc un spectromètre comportant un élément dispersif d'un faisceau lumineux formé d'un ensemble de composants spectraux, l'élément dispersif produisant une dispersion spatiale des composants spectraux sous forme d'un spectre de dispersion spatialement étalé, au moins un détecteur photonique comportant au moins un élément de détection étant disposé en un point de ladite dispersion.

Selon l'invention, un dispositif électromicromécanique optique matriciel est disposé entre l'élément dispersif et le détecteur dans le spectre de dispersion, ledit dispositif électromicromécanique étant formé d'une matrice d'éléments optiques, chacun des éléments optiques pouvant renvoyer une partie du spectre de dispersion selon au moins deux directions en fonction d'un signal de commande, afin de permettre la sélection d'au moins un sous ensemble du spectre pour ledit élément de détection caractérisé en ce que le détecteur photonique est un dispositif matriciel à semi-conducteurs à une ou deux dimensions, ledit détecteur comportant alors des éléments de détection.

Dans divers modes de réalisation de l'invention, les moyens suivants utilisés seuls ou combinés selon toutes les possibilités techniquement envisageables, sont mis en oeuvre :
- au moins l'une des directions ne rencontre pas de détecteur photonique et qu'au moins une des autres directions rencontre au moins un élément de détection,
- le dispositif électromicromécanique optique matriciel est à une ou deux dimensions,
- un organe optique est disposé entre le dispositif électromicromécanique optique et le détecteur photonique, ledit organe optique passif étant choisi parmi les dioptres, les miroirs, les réseaux, les caches comportant une ouverture,
   (le réseau est envisagé par exemple dans le cas où un filtrage du spectre de dispersion est mis en oeuvre, le cache est en particulier mis en oeuvre avec, mais non limitativement, les photomultiplicateurs pour sélectionner une raie ou bande spectrale spécifique dans le spectre de dispersion. L'organe peut être actif en ce sens qu'il peut être commandé et par exemple un cache commandé du type à cristaux liquides)
- le spectromètre comporte en outre des moyens de calcul et de commande, permettant de sélectionner pour chacun des éléments de détection au moins une raie et/ou une bande du spectre de dispersion en fonction d'un programme automatique ou manuel.
   (le programme automatique est par exemple un algorithme de recherche statistique basé sur une analyse en composante principale permettant de déterminer une configuration de mesure particulièrement discriminante, le programme manuel est par exemple la sélection par l'opérateur d'une recherche d'un corps particulier)

L'invention concerne également un procédé de fonctionnement d'un spectromètre selon l'une quelconque des caractéristiques précédentes éventuellement combinées et dans lequel on envoie un signal de commande au dispositif électromicromécanique optique disposé entre l'élément dispersif et le détecteur dans le spectre de dispersion, ledit dispositif électromicromécanique étant formé d'une matrice d'éléments optiques, chacun des éléments optiques pouvant renvoyer une partie du spectre de dispersion selon au moins deux directions en fonction d'une tension de commande, afin de permettre la sélection d'un sous ensemble du spectre pour ledit élément de détection.

Dans une variante du procédé, on effectue une modification de la direction de renvoi à un moment prédéterminé par rapport à un événement.

(En particulier, des mesures de fluorescence ou phosphorescence sur un corps peuvent être effectuées à des temps déterminés par rapport à l'excitation de ce corps, pendant l'excitation l'élément de détection n'étant pas dans la direction de renvoi et l'élément optique basculant au bout d'un temps prédéterminé pour que l'élément soit dans la direction de renvoi d'une partie du spectre de dispersion. Particulièrement intéressant dans le cas où un élément de détection peut être « ébloui » et/ou selon les temps de recouvrement et/ou de réponse des détecteurs.)

L'invention concerne enfin une application du spectromètre précédent à la détection d'au moins un corps par ses propriétés optiques spectrales.

Le terme sous ensemble du spectre couvre l'ensemble lui-même, c'est à dire qu'un élément de détection peut éventuellement intégrer l'ensemble du spectre, tous les composants du spectre atteignant ledit élément de détection. Le terme sous ensemble du spectre couvre également l'ensemble vide, c'est à dire qu'un élément de détection peut être rendu « aveugle », aucun composant du spectre ne l'atteignant. Entre ces deux extrêmes, un élément de détection peut être amené à recevoir une ou plusieurs raies ou bandes spectrales prédéfinies. Par exemple, le dispositif électromicromécanique peut être configuré pour qu'un élément de détection reçoive des raies et/ou bandes correspondant à un corps particulier, Al, Cu par exemple. Dans le cas où plusieurs corps seraient à détecter, des éléments de détection spécifiques peuvent être attribués à chacun de ces corps ou, au cas où certaines raies ou bandes seraient communes, une répartition discriminante entre les raies et/ou bandes ét les éléments de détection est mise en oeuvre. En particulier certaines raies et/ou bandes peuvent être spécifiques de tel ou tel corps à détecter et les mesures ne se feront que pour ces raies et/ou bandes. D'autre part, une autre partie des éléments de détection peut également servir de référence soit en général soit pour un corps ou un groupe de corps particulier. II est ainsi possible d'obtenir un spectromètre dont le fonctionnement peut être adapté à volonté en fonction de l'objectif de mesure : analyse spectrale classique, comparative, etc...

Le terme élément de détection peut concerner aussi bien un détecteur unique, par exemple du type photomultiplicateur ou photodiode unique ou phototransistor unique, qu'un élément d'un composant de détection matriciel, II est aussi possible de mettre en oeuvre des composants du type monocanal ou multicanal dans le cadre de l'invention. Chaque élément de détection a une surface active qui lui permet de détecter une partie du spectre selon la résolution du dispositif à élément dispersif et détecteurs, ladite résolution pouvant ainsi s'étendre de quelques angstrôms à plusieurs micromètres en longueur d'onde suivant les cas. Le terme surface active concerne aussi bien le détecteur proprement dit qu'une éventuelle association d'un détecteur et d'un masque, par exempte une fente. Ainsi, dans le cas d'un spectromètre multicanal, plusieurs éléments de détection sont mis en oeuvre par exemple sous forme d'une série de détecteurs indépendants (photomultiplicateurs ou semi-conducteurs...) ou d'une matrice à une ou deux dimensions (semi-conducteurs ou autres sous forme de circuit intégré). De même, le dispositif électromicromécanique matriciel présente une résolution liée à la taille de chacun des éléments réflectif ou diffractif le composant. Suivant les positions respectives et les caractéristiques optiques des divers composants du spectromètre adaptatif, la résolution peut varier. Dans un mode préféré de mise en oeuvre, on dispose les divers composants afin d'optimiser la résolution au niveau des éléments de détection.

L'invention met donc à la base en oeuvre un filtre adaptable spectrométrique, l'adaptabilité étant programmable par des moyens électroniques et informatiques. Ainsi, seules les. raies ou bandes spectrales porteuses d'information et de préférence discriminantes peuvent être renvoyées sur un ou plusieurs éléments de détection.

La présente invention sera mieux comprise par la lecture de la description qui suit d'exemples non limitatifs de mise en oeuvre pour lesquels,
la Figure 1 représente un premier spectromètre à réponse adaptable par optique matricielle active,
la Figure 2 représente un second spectromètre à réponse adaptable par optique matricielle active,
la Figure 3 représente un troisième spectromètre à. réponse adaptable par optique matricielle active.

Pour des raisons de simplification, les moyens annexes à l'invention, et en particulier les circuits électroniques et informatiques classiques du domaine (acquisition, traitement du . signal, automatisation, calcul, affichage, impression des résultats etc...) n'ont pas été représentés sur les Figures.

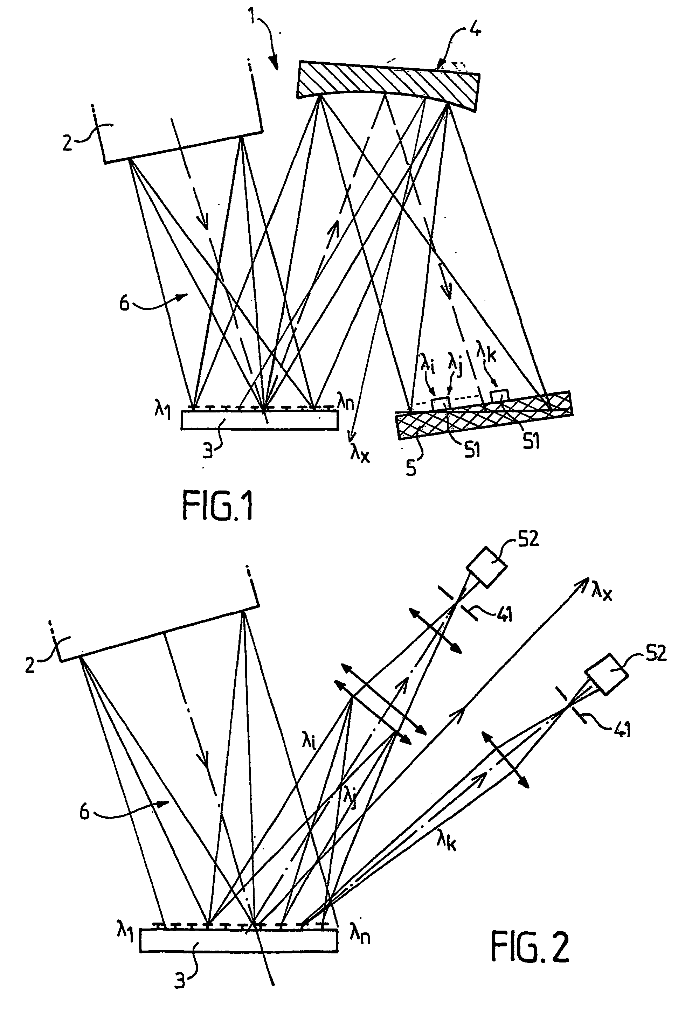

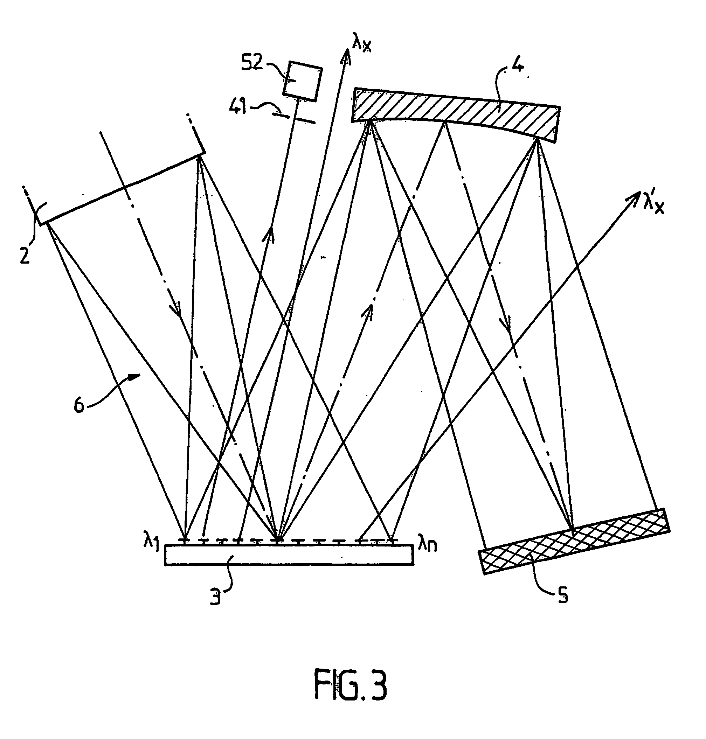

Sur la Figure 1 le premier spectromètre 1 à réponse adaptable par optique matricielle active comporte un dispositif 2 permettant d'obtenir un spectre de dispersion 6 régulièrement réparti dans l'espace comme obtenu par un prisme ou autre élément dispersif spectral classique. Les longueurs d'ondes λ₁ à λₙ₋₁ , λₙ du spectre régulièrement réparties en faisceaux lumineux incidents sont reçues par un dispositif électromicromécanique 3 matriciel comportant en surface un ensemble de miroirs ou réseaux, chacun pouvant être déplacé par un actionneur en fonction d'un signal de commande électrique, pour renvoyer dans au moins deux directions de l'espace, le faisceau incident l'atteignant. De préférence, un même élément du dispositif électromicromécanique peut renvoyer le faisceau incident dans plusieurs directions en fonction du signal de commande afin qu'un même faisceau incident correspondant à une raie ou bande particulière du spectre de dispersion 6 puisse être renvoyé dans une direction particulière d'une zone de l'espace pouvant être balayée selon le signal de commande. Dans une partie ou la totalité de cette zone de l'espace on peut disposer au moins un élément de détection 51 d'un détecteur 5. Dans l'exemple représenté, un dispositif optique supplémentaire est disposé entre le détecteur 5 et le dispositif électromicromécanique 3. Ce dispositif optique supplémentaire est un miroir de renvoi 4. Dans d'autres applications, le dispositif optique supplémentaire peut être une combinaison de dioptres et/ou miroirs et/ou filtres (réseau, cache...). Le détecteur 5 ici représenté est du type matriciel comme dans les spectromètres multicanals. Chacun des éléments de renvoi du dispositif électromicromécanique 3 pouvant être positionné spécifiquement, un même élément de détection 51 peut recevoir une ou plusieurs raies. ou bandes λᵢ, λⱼ, λₖ etc et pas nécessairement celle qu'il aurait reçue si au lieu d'un dispositif électromicromécanique un dispositif de renvoi passif avait été mis en oeuvre. II est également possible de renvoyer une ou plusieurs raies ou bandes spectrales λₓ (λ'ₓ Figure 3) dans des zones de l'espace sans élément de détection. La réponse spectrale est par ailleurs adaptable en temps réel et rapidement du fait de la faible taille des éléments optiques du dispositif électromicromécanique et des capacités des systèmes actuels de calcul et de commande électroniques. Le terme signal de commande correspond à une , tension de commande numérique ou analogique. Une tension nulle peut par exemple correspondre à une position particulière de l'élément optique - de son d'actionneur -, et une tension non nulle correspondre à une autre position particulière de l'élément optique, et donc à des directions différentes de renvoi.

Plus généralement on envisage d'appliquer l'invention d'une manière équivalente à un appareil spectrométrique où le détecteur 5 est remplacé ou complété par toute autre dispositif ou application permettant ainsi la mise en oeuvre de la réponse adaptable spectrométrique. On peut donc disposer grâce à l'invention d'un filtre spectrométrique adaptable en temps réel pour sélectionner une ou plusieurs raies ou bandes spectrales. Par exemple, sur la Figure 1, les raies ou bandes λₓ (λ'ₓ Figure 5) peuvent être utilisées en aval, le détecteur 5 (matriciel ou non) étant alors utilisé en référence de mesure spectrale.

Sur la Figure 2, des détecteurs 52. du type de ceux des spectromètres monocanals, par exemple photomuftipficateurs, sont mis en oeuvre. Un dispositif optique supplémentaire 41 du type cache est également mis en oeuvre ainsi que des dioptres. Toutefois, dans le cas où le détecteur optique présente un élément de détection de taille suffisamment réduite pour obtenir une résolution suffisante, le cache peut être omis. Comme précédemment, les raies ou bandes spectrales λₓ peuvent être utilisées plus en aval et, éventuellement les détecteurs omis. Ainsi les raies ou bandes λₓ sont soit rejetées soit utilisées en aval ou renvoyées vers un élément de détection dans une autre configuration de commande du dispositif électromicromécanique. Ainsi, l'ensemble du spectre de dispersion peut être utilisé ou non en fonction de la programmation du dispositif électromicromécanique. En particulier, une partie du spectre non utile ou non significative peut être éliminé pour éviter de saturer un élément de détection.

La Figure 3, représente une combinaison des exemples précédents avec des composants du type monocanal et du type multicanal.

Dans ces exemples, le nombre de détecteurs et éléments de détection 5, 51, 52 peut être quelconque. Toutefois, étant donné l'adaptabilité de la réponse spectrale, on met en oeuvre un nombre minimal de détecteurs et par exemple. un de chaque type en fonction de ses caractéristiques de réponse en longueur d'onde et/ou sensibilité et/ou rapidité et/ou coût...

Dans ces exemples, le spectre de dispersion peut être dans une seule dimension ou dans deux dimensions et, de même, le dispositif électromicromécanique peut être une matrice à une ou deux dimensions ainsi que le détecteur matriciel 5.

La configuration du dispositif électromicromécanique pouvant être commandée en temps réel, il est possible de moduler la réponse du spectromètre en fonction du temps ou d'un événement extérieur. II est également possible de spécialiser le spectromètre à la détection de corps spécifiques, la configuration du dispositif électromicromécanique étant choisie pour être la plus discriminante possible, des analyses différentielles pouvant également être réalisées pour séparer la contribution de deux ou plus corps dans le spectre. L'analyse peut être effectuée aussi bien en émission qu'en absorption. Comme mentionné, on peut également obtenir les avantages d'un spectromètre multicanal en mettant en oeuvre un ou plusieurs détecteurs monocanais.

## Revendications

1. Spiectromètre (1) comportant un élément dispersif (2) d'un faisceau lumineux formé d'un ensemble de composants spectraux, l'élément dispersif servant à produire une dispersion spatiale des composants spectraux sous forme d'un spectre de dispersion (6) spatialement étalé, au moins un détecteur photonique (5, 52) comportant au moins un élément de détection (5) disposé en un point de ladite dispersion,
un dispositif étectromicromécanique (3) optique matriciel disposé entre l'élément dispersif et le détecteur dans le spectre de dispersion, ledit dispositif électromicromécanique étant formé d'une matrice d'éléments optiques chacun des éléments optiques pouvant renvoyer une partie du spectre de dispersion selon au moins deux dtrecttons en fonction d'un signal de commande afin de permettre la sélection d'au moins un sous ensemble du spectre pour chacun desdits éléments de détection,
**caractérisé en ce que**
le détecteur photonique est un dispositif matriciel à semi-conducteurs à une ou deux dimensions, ledit détecteur comportant des éléments de détection.

2. Spectromètre selon la revendication 1, où le dispositif électromécanique est arrangé de manière à ce que, lors du fonctionnement du spectrometre, au moins l'une des directions ne rencontre pas de détecteur photonique et au moins une des autres directions rencoritre au moins un éiément de détection.

3. Spectromètre selon la revendication 1 ou 2 où le dispositif électromicromécanique optique matriciel est à une ou deux dimensions.

4. Spectromètre selon l'une quelconque des revendications précédentes comportant en outre un organe optique passif (4, 41) entre le dispositif électromicromécanique optique et le détecteur photonlque, ledit organe optique passif étant choisi parmi les dioptres, les miroirs, les réseaux, les caches comportant une ouverture.

5. Spectromètre selon l'une quelconque des revendications précédentes comportant en outre des moyens de calcul et de commande permettant de sélectionner pour chacun des éléments de détection au moins une raie et/ou une bande du spectre de dispersion en fonction d'un programme automatique ou manuel.

6. Procédé de fonctionnement d'un spectromètre selon l'une quelconque des revendications précédentes où, d'une part, on fournit un tel spectromètre et où, d'autre part, on envoie une tension de commande au dispositif électromicromécanlque (3) optique disposé entre l'élément dispersif (2) et le détecteur (5, 52) dans le spectre de dispersion (6) ledit dispositif électromécanique étant formé d'une matrice d'éléments optiques, chacun des éléments optiques pouvant renvoyer une partie du spectre de dispersion selon au moins deux directions en fonction d'un signal de commande, afin de permettre la sélection d'un sous ensemble du spectre pour ledit élément de détection.

7. Procédé de fonctionnement d'un spectromètre selon la revendication 6 où l'on effectue en outre une modification de la direction de renvoi à un moment prédéterminé par rapport à un événement.

8. Application du spectromètre de l'une quelconque des revendications 1 à 5 à la détection d'au moins un corps par ses propriétés optiques spectrales.

## Claims

1. A spectrometer (1) comprising a dispersive element (2) of a light beam made of a set of spectral components, the dispersive element allowing to generate a spatial dispersion of the spectral components in the form of a dispersion spectrum (6) spatially spread, at least one photon detector (5, 52) comprising at least one detection element (5) provided at one point of said dispersion, a matrix optical electromicromechanical device (3) provided between the dispersive element and the detector in the dispersion spectrum, said electromicromechanical device being made of a matrix of optical elements, each of the optical elements being able to send back a portion of the dispersion spectrum according to at least two directions in relation to a control signal, in order to enable the selection of at least one sub-assembly of the spectrum for each of said detection elements and the photon detector is a one- or two-dimensional semiconductor matrix device, said detector comprising detection elements **characterised in that** the photon detector is a one or two dimensional semiconductor matrix device, said detector comprising detection elements.

2. A spectrometer according to claim 1, wherein the electromicromechanical device is provided such that during the use of the spectrometer at least one of the directions does not encounter any photon detector and at least one of the other directions encounters at least one detection element.

3. A spectrometer according to claim 1 or 2 wherein the matrix optical electromicromechanical device is one- or two-dimensional.

4. A spectrometer according to any one of the preceding claims comprising moreover a passive optical member (4, 41) between the optical electromicromechanical device and the photon detector, said passive optical member being selected among the dioptres, the mirrors, the gratings, the caches comprising an aperture.

5. A spectrometer according to any one of the preceding claims comprising moreover calculation and control means enabling to select for each of the detection elements at least one line and/or one band of the dispersion spectrum in relation to an automatic or manual programme.

6. A method for operating a spectrometer according to any one of the preceding claims wherein on one hand such a spectrometer is provided and wherein an the other hand a control voltage is sent to the optical electromicromechanical device (3) arranged between the dispersive element (2) and the detector (5,52) in the dispersion spectrum (6), said electromicromechanical device being made of a matrix of optical elements, each of the optical elements being able to send back a portion of the dispersion spectrum according to at least two directions in relation to a control signal, in order to enable the selection of a sub-assembly of the spectrum for said detection element.

7. A method for operating a spectrometer according to claim 6 wherein moreover the return direction is modified at a predetermined moment with respect to an event.

8. Application of the spectrometer according to any one of claims 1 to 5 to the detection of at least one compound by means of its spectral optical properties.

## Patentansprüche

1. Spektrometer (1), umfassend ein Dispersionselement (2) für einen Lichtstrahl, der aus einer Gesamtheit von Spektralkomponenten gebildet ist, wobei das Dispersionselement dazu dient, eine Raumdispersion der Spektralkomponenten in Form eines räumlich ausgebreiteten Dispersionsspektrums (6) zu erzeugen, mindestens einen Photondetektor (5, 52), der mindestens ein Detektionselement (5) aufweist, das an einem Punkt der Dispersion angeordnet ist, eine optische elektromikromechanische Matrixvorrichtung (3), die zwischen dem Dispersionselement und dem Detektor in dem Dispersionsspektrum angeordnet ist, wobei die elektromikromechanische Vorrichtung aus einer Matrix von optischen Elementen gebildet ist, wobei jedes der optischen Elemente einen Teil des Dispersionsspektrums in mindestens zwei Richtungen in Abhängigkeit von einem Steuersignal zurücksenden kann, um die Auswahl von mindestens einer Untereinheit des Spektrums für jedes der Detektionselemente zu ermöglichen, **dadurch gekennzeichnet, dass** der Photondetektor eine ein- oder zweidimensionale Halbleitermatrixeinrichtung ist, wobei der Detektor Detektionselemente umfasst.

2. Spektrometer nach Anspruch 1, bei dem die elektromechanische Vorrichtung derart angeordnet ist, dass während des Betriebs des Spektrometers mindestens eine der Richtungen nicht auf den Photondetektor trifft und mindestens eine der anderen Richtungen mindestens auf ein Detektionselement trifft.

3. Spektrometer nach Anspruch 1 oder 2, bei dem die optische elektromikromechanische Matrixeinrichtung ein- oder zweidimensional ist.

4. Spektrometer nach einem der vorstehenden Ansprüche, ferner umfassend ein passives optisches Element (4, 41) zwischen der optischen elektromikromechanischen Vorrichtung und dem Photondetektor, wobei das passive optische Element aus den Dioptern, den Spiegeln, den Netzen, den Abdeckungen, die eine Öffnung aufweisen, ausgewählt ist.

5. Spektrometer nach einem der vorstehenden Ansprüche, ferner umfassend Berechnungsmittel und Steuermittel. die es ermöglichen, für jedes der Detektionselemente mindestens eine Linie und/oder ein Band des Dispersionsspektrums in Abhängigkeit von einem automatischen oder manuellen Programm auszuwählen.

6. Verfahren für den Betrieb eines Spektrometers nach einem der vorstehenden Ansprüche, gemäß dem einerseits ein solches Spektrometer bereit gestellt und andererseits eine Steuerspannung an die optische elektromikromechanische Einrichtung (3) gesendet wird, die zwischen dem Dispersionselement (2) und dem Detektor (5, 52) in dem Dispersionsspektrum (6) angeordnet ist, wobei die elektromechanische Einrichtung aus einer Matrix aus optischen Elementen gebildet ist, wobei jedes der optischen Elemente einen Teil des Dispersionsspektrums in mindestens zwei Richtungen in Abhängigkeit eines Steuersignals zurücksenden kann, um die Auswahl einer Untereinheit des Spektrums für das Detektionselement zu ermöglichen.

7. Verfahren für den Betrieb eines Spektrometers nach Anspruch 6, bei dem ferner eine Änderung der Rücksenderichtung zu einem vorbestimmten Zeitpunkt, bezogen auf ein Ereignis, vorgenommen wird.

8. Anwendung des Spektrometers nach einem der Ansprüche 1 bis 5 für die Detektion von mindestens einem Körper durch seine optischen Spektrafeigenschaften.
